# EUROPEAN PATENT SPECIFICATION

(11) **EP 1 621 395 B1**
(45) Date of publication and mention of the grant of the patent: **29.09.2010**
(21) Application number: 05105512.7
(22) Date of filing: 21.06.2005
(51) Int. Cl.: B60N 2/28

(54) **Child car seat adaptable to child growth**
Fahrzeugkindersitz an Kinderwachstum anpassbar
Siège-auto pour enfant adaptable à la croissance de l'enfant

(30) Priority: 29.07.2004 IT MI20041554
(43) Date of publication of application: 01.02.2006
(73) Proprietor: ARTSANA S.p.A., 22070 Grandate (Como) (IT)
(72) Inventor: Catelli, Pietro, Dr., 22100 Como (IT)
(74) Representative: Ripamonti, Enrico

(56) References cited:
- DE-U1- 20 118 046

## Description

The present invention relates to a child car seat in accordance with the introduction to the main claim.

Various types of child seats, and in particular child car seats, are known having dimensions adjustable as the child grows. With particular reference to child seats presenting a backrest provided with movable sidepieces and a movable headrest, some known models enable the head rest and said sidepieces to be moved together, while others enable said sidepieces and headrest to be moved separately. The present invention relates to a child seat of this latter type.

In state of the art child seats of the aforesaid type, the headrest and sidepieces are moved independently by generally acting directly on the headrest to move it longitudinally along the backrest, while operating independent control members to adjust the relative distance between said sidepieces. Although these solutions enable the backrest to be adjusted in line with the various growth stages of the child, they are not easy to use as the elements or members for controlling the separate movements of the various parts of the backrest are generally positioned at a different distance apart. As a result the user has to move along the backrest to obtain the desired adjustment, this being a movement not always easy to make especially if the child seat is already disposed in its position of use on the seat of a car. In this respect, as at least the members for controlling the movement of the sidepieces are positioned on the rear of the backrest, when the child seat is already disposed in the car these members are not reachable by the user. Consequently. in order to adjust the width of the backrest the user has to remove the child seat from its position of use.

DE 2011 8046 U1 shows a child car seat with the features of the preambule of claim 1.

An object of the present invention is to provide an improved child car seat presenting a backrest provided with laterally movable sidepieces to enable the width of the region accommodating the child to be widened, and a height-adjustable headrest enabling the height of the backrest to be adapted to the growth of the child, said sidepieces and said headrest being movable independently of each other.

A particular object of the invention is to provide a child seat of the stated type in which said sidepieces and headrest can be easily and quickly moved even when the child seat is disposed on the seat of a car without the need to remove the child seat therefrom.

A further object is to provide a child seat which enables the distance between said sidepieces to be adjusted independently of the position attained by the headrest.

A further object is to provide a child seat in which the distance between said sidepieces can be adjusted continuously, hence allowing fine adjustment of the space on the backrest for accommodating the child.

These and further objects which will be apparent to an expert of the art are attained by a child seat in accordance with the accompanying claims.

The present invention will be more apparent from the accompanying drawings, which are provided by way of non-limiting example and in which
Figure 1 is a perspective view of a child seat according to the invention;
Figure 2 is a front view of the backrest of the child seat of Figure 1 showing the components used to move its parts;
Figure 3 is a view similar to Figure 2, but in which part of the child seat components are in a different position of use;

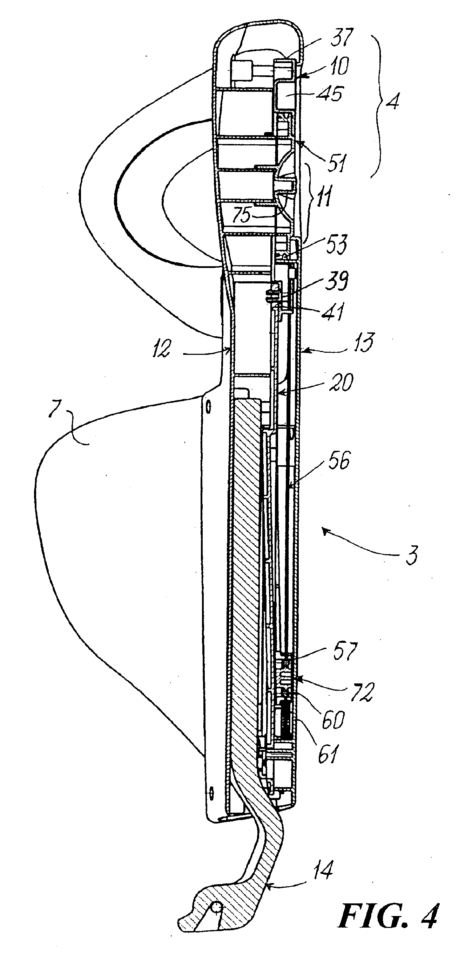

Figure 4 is a section on the line 4-4 of Figure 3;

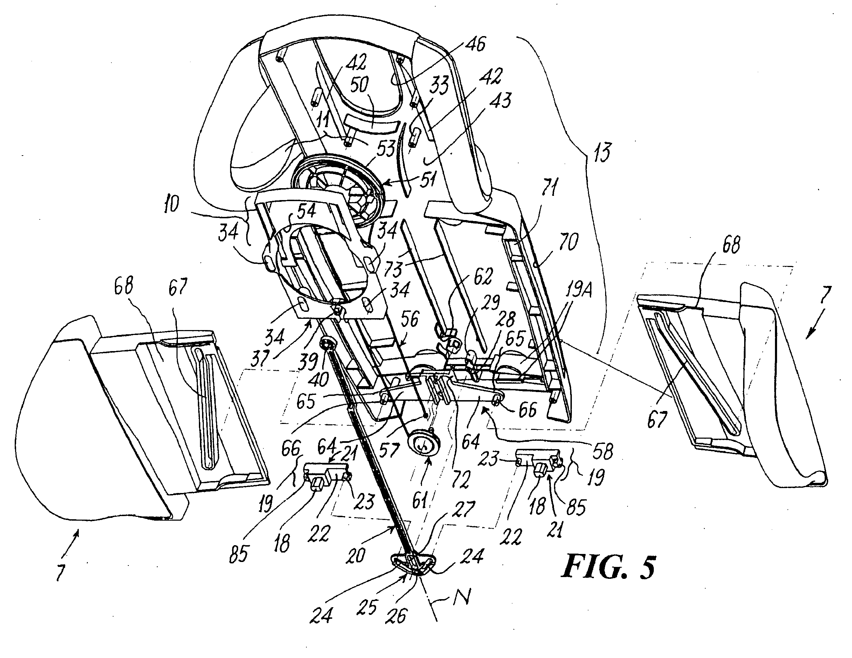

Figure 5 is an exploded front view of a part of the child seat backrest; and

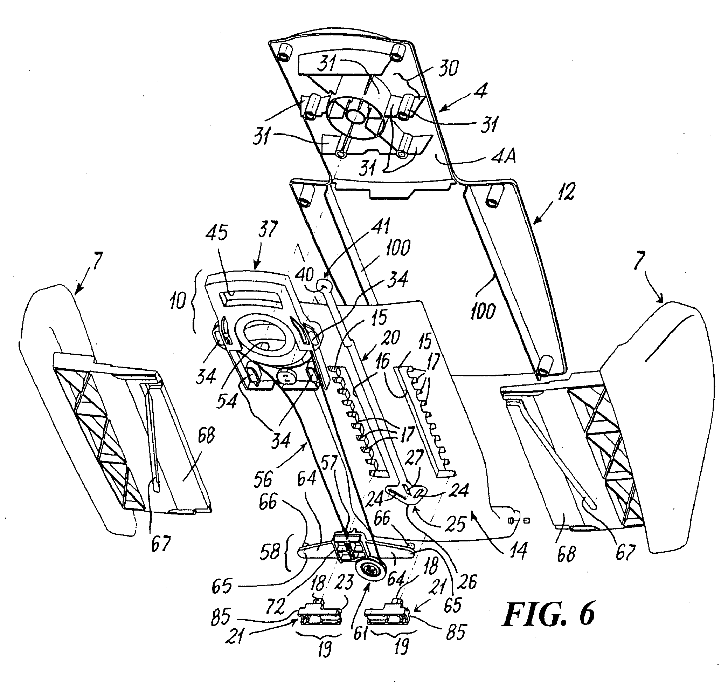

Figure 6 is an exploded rear perspective view, similar to that of Figure 5, but with the child seat backrest provided with a larger number of components.

With reference to said figures, a child car seat according to the invention is indicated overall by 1 and comprises a sitting portion 2 and a backrest 3. This latter is provided with a headrest 4 and, along its side edges 5 and 6, with sidepieces 7. The headrest 4 can be moved along a longitudinal axis W of the backrest 3 to adjust its distance from the sitting portion 2. Independently of the headrest 4, the sidepieces 7 are also movable along a transverse axis K perpendicular to said axis W so that they can be moved away from or towards each other depending on the size of the child seated on the child seat 1.

In other words, the child seat of the invention is of the type which conforms to the growth of the child such as to adapt to the child by enabling its dimensions to be changed with child growth.

As stated, the headrest 4 and the sidepieces 7 can be moved independently of each other. This movement is obtained by respective first and second control members 10 and 11 operationally associated with the headrest 4 and advantageously and preferably disposed in correspondence with this latter.

More specifically, the backrest 3 comprises a front first portion 12 on which the child rests when seated on the child seat 1 and a rear second portion 13 acting as the rear "closure" for the backrest. Between the portions 12 and 13 a backrest support element 14 is provided coupled to the sitting portion 2 and presenting a pair of substantially rectangular parallel slots 15, each having along one of its parallel longer sides 16 a plurality of recesses 17 defining a sort of toothing along said longer side 16. This toothing cooperates with projections 18 on slide blocks 19 arranged to cooperate with a control rod 20 operated by the first control member 10 rigid with the rear portion 13 of the backrest 3 and movable between guide elements 19A projecting from the portion 13 towards the element 14.

More specifically, each slide block 19 comprises a body 21 presenting a flat part 22 from which a pin 23 rises to cooperate with a corresponding slit 24 provided in an end element 25 of the control rod 20. These slits 24 (each arranged to cooperate with a corresponding slide block 19 which itself cooperates, as stated, with the recesses 17 of a corresponding slot 15 of the support element 14) are formed with their axes Z and T converging or inclined towards an end part 26 of said end element 25.

The end element also comprises an elongate hole 27 having its longitudinal axis lying along the longitudinal axis of the control rod 20 (corresponding to the axis W of the backrest), said elongate hole receiving a pin 28 projecting from a support 29 provided in the rear portion 13 of the backrest 3. This pin 28 acts as a guide element for the movement of the control rod 20 when operating the corresponding first control member 10 for moving the headrest 4.

This latter is defined above the front portion 12 and rear portion 13 of the backrest 3 and by corresponding ends of these latter. Specifically, the front portion 12 presents on that flat face 4A facing the rear portion 13 of the backrest 3, a retention element 30 for securing the first control member 10 to the front portion 12 of the backrest and hence to the headrest 4. This retention element 30 is defined by a plurality of projections 31 jutting from the flat face 4A of the portion 12 to define seats 32 for pins 33 cooperating with holes or slits 34 provided in the first control member 10. These pins 33 secure the control member to the front portion 12 of the backrest 3 and hence to its headrest 4, and also guide said first control member 10 in its axial movement along the longitudinal axis W of the backrest when this member is operated.

In detail, the first control member 10 comprises a substantially rectangular body 37 presenting the slits 34 in predefined positions. The body 37 presents a pin 39 arranged to snap-cooperate with a hole 40 provided at a free end 41 of the control rod 20 to fix this rod to said control member. The body 37 is inserted between ribs or guides 42 projecting from that face 43 of the rear portion 13 of the backrest 3 which faces the front portion 12, said ribs 42 acting as guides for the movement of the body 37 of the first control member 10 when operated by being gripped within a recess 45 provided in the body 37 and reachable from the outside of the rear portion 13 through an aperture 46 provided in this latter behind the headrest 4 where the first control member 10 is positioned. The said pins 33 for guiding the movement of the body 37 between the guide ribs 42 also project from the inner face 43 of the rear portion 13.

From the face 43 of the rear portion 13 there also projects an arched rib 50 at which there is positioned a wheel 51 presenting a groove 53 in its edge. The wheel 51 is supported by said element 30 retaining the front portion 12 and is inserted into a seat 54 provided within the body 37 of the control member 10. The wheel 51 defines the second control member 11 for moving the sidepieces 7 of the backrest.

The said groove 53 houses a cable 56 having a first cable terminal 57 rigid with a slide block 58 movable between the support element 14 and the rear portion 13 of the backrest 3. A second cable terminal 60 is rigid with a pulley 61 rotatably inserted into a corresponding seat 62 rigid with the inner face 43 of the rear portion 13 of the backrest 3.

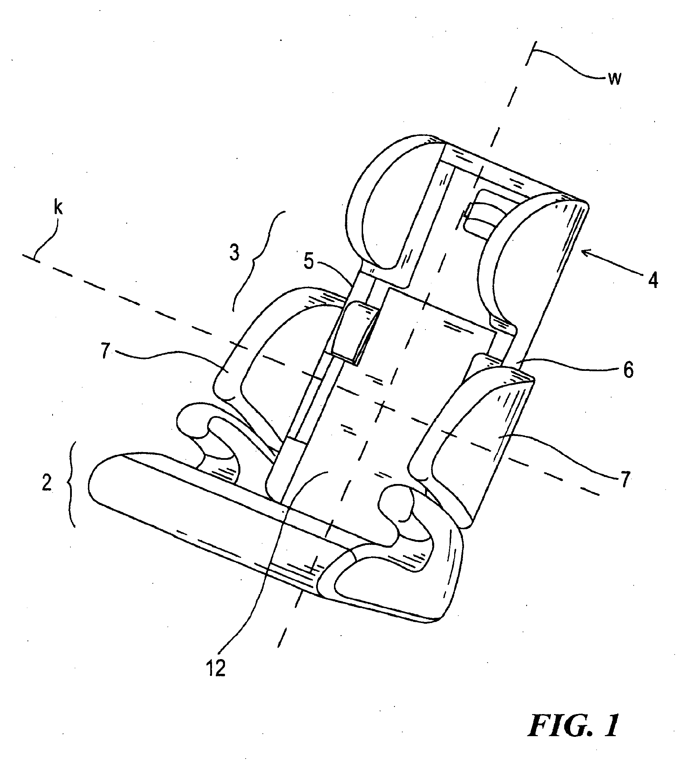

The slide block 58 presents arms 64 having at a free end 65 a projecting pin 66 cooperating with inclined slots 67 provided in flat parts 68 rigid with the sidepieces 7 and inserted through apertures 70 provided in lateral edges 71 of the rear portion 13, between this latter and the support element 14. The slide block 58 comprises a central portion 72 (with which the cable terminal 57 is rigid) slidable within guides 73 defined by ribs projecting parallel from the inner face 43 of the rear portion 13 of the backrest 3. The movement of this slide block within said guides along the rear portion 13 of the backrest results in sliding of the pins 66 within the inclined slots 67 of the flat parts 68 of the movable sidepieces 7. By virtue of this inclination, said sidepieces move transversely to the backrest, along the direction defined by the axis K in Figure 1.

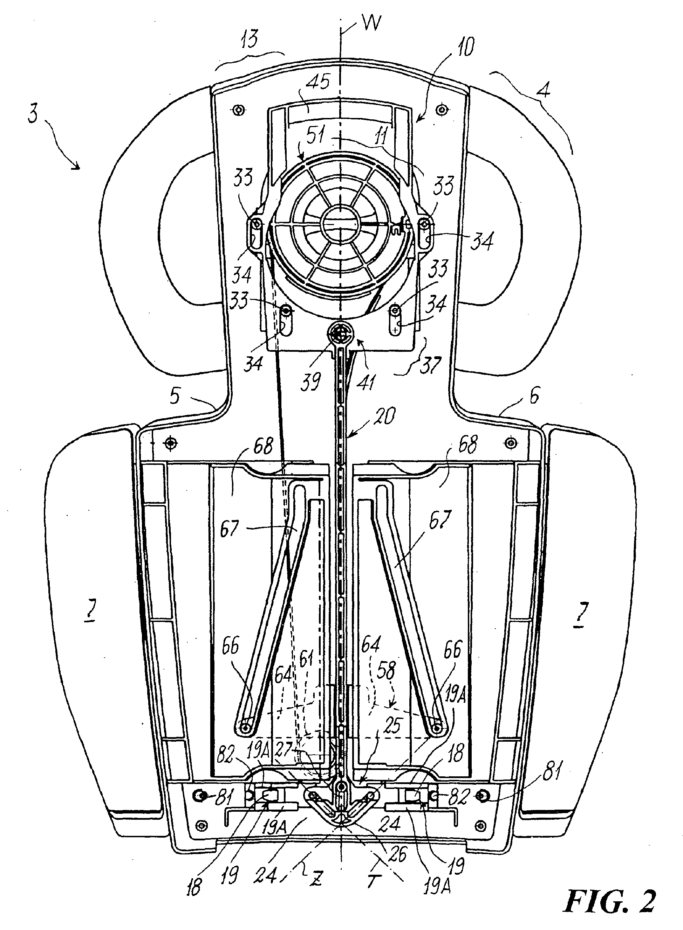

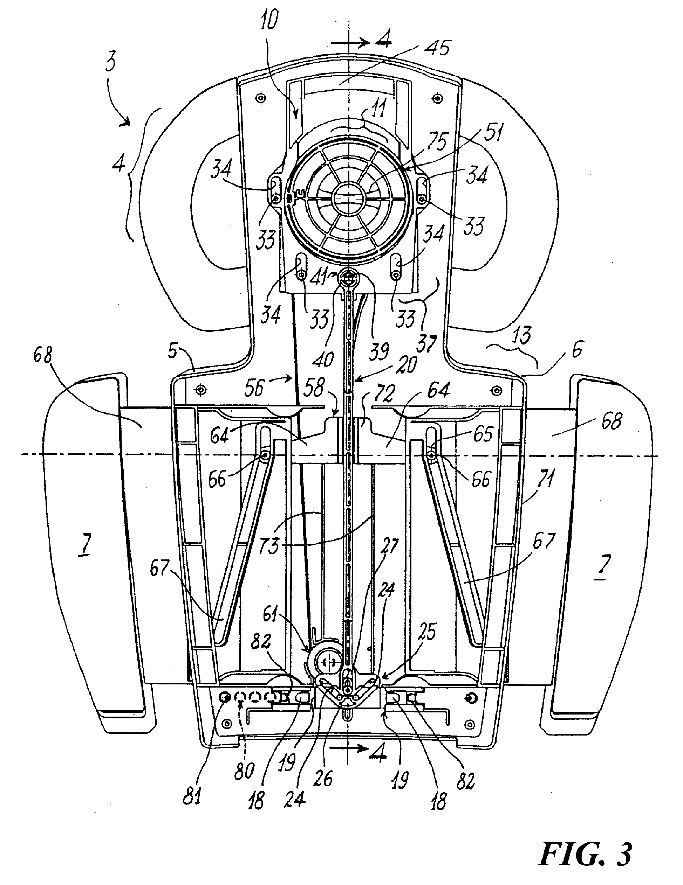

To achieve a complete excursion of the sidepieces 7 within the apertures 70 of the rear portion 13 of the backrest 3, i.e. to enable the sidepieces to undergo total movement from a retracted position (Figure 2) to a completely external position (Figure 3), the wheel 51 must be rotated about is central axis through 180°. This rotation is achieved by acting on a handgrip 75 provided on the central part of said wheel 51.

It will now be assumed that the position of the sidepieces 7 of the backrest 3 is to be modified by moving them from the position shown in Figure 1 to the completely widened position of Figure 3. To achieve this, the handgrip 75 of the wheel 51 is operated to rotate this latter within the body 37 of the first control member 10 in correspondence with the arched rib 50 of the rear portion 13 of the backrest 3. This rotation results in a corresponding rotation of the pulley 61 about its axis and a movement of the slide block 58 between the guides 73 of said rear portion 13. This movement brings the slide block from the position shown by dashed lines in Figure 2 to the raised position of Figure 3. During this movement, the slide block pins 66 slide relatively within the inclined slots 67 of the flat parts 68 of the sidepieces 7, which move within the apertures 70 and emerge from them. Consequently, when the slide block reaches the maximum position of its raising travel, said sidepieces are totally distant from the corresponding edges 71 of the rear portion 13 of the backrest 3 and are wide apart.

If the position or height of the headrest 4 is to be modified, the control member 10 is operated by acting on the cable 45 of the body 37 through the aperture 46 of the rear portion 13 (this aperture also providing access to the handgrip 75 of the wheel 51, i.e. the second control member 11 for moving the sidepieces 7). The body 37 is then raised (in the manner of a slider along the ribs or guides 42) towards the upper end of the backrest to longitudinally move the control rod 20 and cause the pin 28 to slide relatively within the elongate hole 27 present in the end element 25 of the sidepiece. This raising of the control rod 20 results in a movement of the pins 23 of the slide blocks 19 within the slits 24 so that these slide blocks are made to approach each other within the guide elements 19A with movement in a direction perpendicular to the longitudinal axis W of the backrest 3. It should be noted that this movement is opposed by an elastic element or spring 80 having a first end 81 rigid with the rear portion 13 of the backrest 3 and a second end 82 rigid with a coupling tooth 85 present at one end of the corresponding slide block 19.

The slide blocks 19 hence move one towards the other to thus separate their projections 18 from the corresponding recesses 17 in which they lie. These projections 18 thus move into the parallel slots 15 of the support element 14 to enable the slide blocks 19, the rod 20 and the body 37 to be moved towards the upper end of the backrest 3. This movement raises the portions 12 and 13 of the backrest along guides 100 present internally on the portion 12 and within which the support element 14 lies, with consequent raising of the headrest 4, as the body 37 of the first control member 10 is rigid with the portion 13 when the pins 33 thereof reach their end of travel within the holes or slots 34 of said body; as the portion 13 is rigid with the portion 12 (by the engagement of the pins of the one in the seats of the other), the movement of the body 37 results in movement of said portions and hence of the headrest on the backrest.

When the required position has been reached, the body 37 is released and the springs 80 return the slide blocks 19 to the interior of the recesses 17 in front of which the projections 18 of these slide blocks lie.

It should be noted that in whatever position the headrest 4 lies, as the first control member 10 for moving the headrest contains the sidepiece second control member 11, this latter is available to the user. In other words, in whatever position the headrest 4 lies, the user is always able to independently adjust the distance between the sidepieces 7.

As the first and second control members 10 and 11 are positioned at the headrest 4 and accessible from its rear, the aforesaid adjustments are easily available to the user even when the child seat is mounted on the seat of a vehicle.

One embodiment of the invention has been described; however other embodiments are available to the expert of the art on reading the preceding description, such as that in which the first control means 10 are adjacent to the second control means 11 and do not contain them as in the figures, or that in which the first and second control means 10 and 11 are associated with the backrest 3 in a part close to the headrest 4 but not rigid with this latter, even though being functionally associated with it. These other embodiments therefore also fall within the scope of the following claims.

## Claims

1. A child car seat (1) comprising a sitting portion (2) and a backrest (3), this latter being provided with a headrest (4) and sidepieces (7) projecting above the sitting portion (2), said sidepieces (7) being movable laterally and able to be spaced apart to increase the useful space for retaining the child on the backrest (3), said headrest (4) being movable relative to the sitting portion (2) with a movement independent of that of said sidepieces (7), said movements enabling the size of the backrest (3) to be adapted to the growth of the child, first and second, control means (10, 11) being provided for moving said sidepieces (7) and said headrest (4), said first and second control means (10, 11) are functionally associated with the headrest (4), the second control means (11) for moving said sidepieces (7) being hence joint with the first control means (10) for raising the headrest, said arrangement enabling the headrest (4) and said sidepieces (7) to be moved separately, and allowing these latter to be moved in whatever position the headrest (4) lies, **characterised in that**
the first control means (10) for moving the headrest (4) and those (11) for moving the sidepieces (7) are both disposed on the headrest (4).

2. A child seat as claimed in claim 1, **characterised in that** the first control means (10) for moving the headrest (4) are adjacent to the second control means (11) for moving the sidepieces (7).

3. A child seat as claimed in claim 1, **characterised in that** the first control means (10) for moving the headrest (4) contain the second control means (11) for moving the sidepieces (7).

4. A child seat as claimed in claim 1, **characterised in that** the headrest (4) is defined at one end of at least one portion (12, 13) of the backrest (3) and is movable relative to a support element (14) for this latter fixed to the sitting portion (2).

5. A child seat as claimed in claim 4, **characterised in that** the headrest is defined by connected ends of a first portion (12) and of a second portion (13) of the headrest which define a front part and a rear part of this latter, between said first and second portion (12, 13) there being disposed the support element (14) for the backrest, these portions being rigid with each other and being guidedly movable along said support element (14).

6. A child seat as claimed in claim 5, **characterised in that** an inner face (43) of one of said first and second portions (12, 13) which faces said support element (14) presents guides (100) for the relative movement of said portions (12, 13) along said support element (14), this latter being contained within said guides (100).

7. A child seat as claimed in claim 4, **characterised in that** the support element (14) presents stop means (17) for blocking the movement of the first and second portion (12, 13) of the backrest (3) therealong, said portions presenting movable counter-means (18) arranged to cooperate with said means in order to block said movement, but to be separated from them to allow this movement, said counter-means being operated by the first control means (10) for moving the headrest (4).

8. A child seat as claimed in claim 7, **characterised in that** the stop means are a plurality of recesses (17) provided along a longer side of at least one elongate slot (15) formed within the support element (14), the counter-means being defined by a corresponding projection (18) on a slide block (19) movable between guide elements (19A) projecting from an inner face (43) of the second portion (13) of the backrest towards the support element (14), said slide block being movable between said guides in a direction transverse to a longitudinal axis (W) of the backrest (3), said movement being generated and controlled by the control means (10) via a control rod (20) to which said slide block is secured, the movement being opposed by an elastic return member (80).

9. A child seat as claimed in claim 8, **characterised in that** the slide block presents a pin (23) coupled to a slit (24) provided at a first end (25) of the control rod (20), this latter lying spatially with its axis parallel to the longitudinal axis (W) of the backrest (3), said slit being inclined to the axis of said rod.

10. A child seat as claimed in claim 9, **characterised in that** the control rod (20) presents a second end (41) cooperating with the first control means (10) for moving the headrest (4).

11. A child seat as claimed in claim 1, **characterised in that** the control means (10) for moving the headrest (4) are a body (37) movable between guides (42) projecting from the inner face (43) of the second portion (13) of the backrest (3), said body (37) presenting a gripping portion (45) and being in the interior of the backrest (3).

12. A child seat as claimed in claim 11, **characterised in that** said gripping portion (45) can be reached through an aperture (46) provided in the backrest (3).

13. A child seat as claimed in claim 12, **characterised in that** said aperture (46) is provided in the second portion (13) of the backrest (3) and is closed frontally by the first portion (12) of the backrest, said body (37) of the first control means (10) for moving the headrest (4) being enclosed between said first and second portion (12, 13) and being rigid therewith by cooperation with a retention element carried by at least one of said portions.

14. A child seat as claimed in claims 3 and 11, **characterised in that** the body (37) presents a seat (54) for the control means (11) for moving the sidepieces (7).

15. A child seat as claimed in claim 1 or 14, **characterised in that** the control means (11) for moving the sidepieces (7) are a rotary member (51) cooperating with a transmission member (56) connected to a movable slide block (58) inserted into the backrest and cooperating with the movable sidepieces (7), said slide block and said sidepieces (7) being formed such that a translation of one produces a movement of the other perpendicular to the direction of translation.

16. A child seat as claimed in claim 15, **characterised in that** the rotary member (51) is a perimetrally grooved wheel, in the groove there being present a cable (46) acting as the transmission element (56) and cooperating with the movable slide block, said cable also cooperating with a return pulley (61) distant from said grooved wheel (51).

17. A child seat as claimed in claim 15, **characterised in that** the slide block moves between guides (73), projecting from an inner face (43) of the second portion (13) of the backrest, with rectilinear movement along the longitudinal axis (W) of said backrest (3), the slide block carrying projections (66) inserted into slots (67) provided in flat parts (68) rigid with the sidepieces (7) and inserted into the backrest (3) through apertures (70) provided laterally in this latter, the slots lying spatially with their axis inclined to the longitudinal axis (W) of the backrest (3).

## Patentansprüche

1. Kindersitz (1) für ein Fahrzeug, welcher einen Sitzabschnitt (2) und eine Rückenlehne (3) umfasst, wobei diese letztgenannte mit einer Kopfstütze (4) und Seitenteilen (7), welche oberhalb des Sitzabschnitts (2) hervorragen, versehen ist, wobei die Seitenteile (7) seitlich bewegbar und derart beabstandbar sind, dass sie den nutzbaren Raum vergrößern, um das Kind an der Rückenlehne (3) zu halten, wobei die Kopfstütze (4) relativ zu dem Sitzabschnitt (2) durch eine Bewegung, welche unabhängig von derjenigen der Seitenteile (7) ist, bewegbar ist, wobei die Bewegungen ermöglichen, dass die Ausmaße der Rückenlehne (3) an die Entwicklung des Kindes angepasst wird, wobei erste und zweite Steuermittel (10, 11) vorhanden sind, um die Seitenteile (7) und die Kopfstütze (4) zu bewegen, wobei die ersten und die zweiten Steuermittel (10, 11) funktional der Kopfstütze (4) zugeordnet sind, wobei die zweiten Steuermittel (11) zur Bewegung der Seitenteile (7) daher mit den ersten Steuermitteln (10) zum Anheben der Kopfstütze verbunden sind, wobei die Anordnung ermöglicht, dass die Kopfstütze und die Seitenteile (7) getrennt bewegt werden, und ermöglicht, dass diese letztgenannten unabhängig von der Position der Kopfstütze (4) bewegt werden, **dadurch gekennzeichnet, dass** die ersten Steuermittel (10) zur Bewegung der Kopfstütze (4) und diejenigen (11) zur Bewegung der Seitenteile (7) beide auf der Kopfstütze (4) angeordnet sind.

2. Kindersitz nach Anspruch 1, **dadurch gekennzeichnet, dass** die ersten Steuermittel (10) zur Bewegung der Kopfstütze (4) benachbart zu den zweiten Steuermitteln (11) zur Bewegung der Seitenteile (7) sind.

3. Kindersitz nach Anspruch 1, **dadurch gekennzeichnet, dass** die ersten Steuermittel (10) zur Bewegung der Kopfstütze (4) die zweiten Steuermittel (11) zur Bewegung der Seitenteile (7) aufnehmen.

4. Kindersitz nach Anspruch 1, **dadurch gekennzeichnet, dass** die Kopfstütze (4) an einem Ende von zumindest einem Abschnitt (12, 13) der Rückenlehne (3) definiert ist und relativ zu einem Halteelement (14) zur Befestigung der letztgenannten an dem Sitzabschnitt (2) bewegbar ist.

5. Kindersitz nach Anspruch 4, **dadurch gekennzeichnet, dass** die Rückenlehne durch verbundene Enden eines ersten Abschnitts (12) und eines zweiten Abschnitts (13) der Kopfstütze definiert ist, welche einen vorderen Teil und einen rückseitigen Teil dieser letztgenannten definieren, wobei zwischen dem ersten und dem zweiten Abschnitt (12, 13) das Halteelement (14) für die Rückenlehne angeordnet ist, wobei diese Abschnitte zueinander unbeweglich und entlang des Halteelements (14) geführt bewegbar sind.

6. Kindersitz nach Anspruch 5, **dadurch gekennzeichnet, dass** eine innere Fläche (43) des ersten oder des zweiten Abschnitts (12, 13), welche dem Halteelement (14) gegenüberliegt, Führungen (100) für die relative Bewegung der Abschnitte (12, 13) entlang dieses Halteelements (14) aufweist, wobei dieses letztgenannte in den Führungen (100) aufgenommen ist.

7. Kindersitz nach Anspruch 4, **dadurch gekennzeichnet, dass** das Halteelement (14) Stoppmittel (17) zur Verhinderung der Bewegung des ersten und des zweiten Abschnitts (12, 13) der Rückenlehne (3) dort entlang aufweist, wobei die Abschnitte bewegbare Gegenmittel (18) aufweisen, welche derart angeordnet sind, dass sie mit den Mitteln derart zusammenwirken, dass sie die Bewegung verhindern, aber von ihnen trennbar sind, um diese Bewegung zu ermöglichen, wobei die Gegenmittel durch die ersten Steuermittel (10) zur Bewegung der Kopfstütze (4) betrieben werden.

8. Kindersitz nach Anspruch 7, **dadurch gekennzeichnet, dass** die Stoppmittel mehrere Vertiefungen (17) sind, welche entlang einer längeren Seite zumindest eines länglichen Schlitzes (15), welcher in dem Halteelement (14) ausgebildet ist, vorhanden sind, wobei die Gegenmittel durch einen entsprechenden Vorsprung (18) auf einem Gleitblock (19) definiert sind, welcher zwischen Führungselementen (19A), die von einer inneren Fläche (43) des zweiten Abschnitts (13) der Rückenlehne zu dem Halteelement (14) hervorragen, bewegbar ist, wobei der Gleitblock zwischen den Führungen in einer Richtung quer zu einer Längsachse (W) der Rückenlehne (3) bewegbar ist, wobei die Bewegung durch die Steuermittel (10) mittels einer Steuerstange (20), an welcher der Gleitblock befestigt ist, erzeugt und gesteuert wird, wobei der Bewegung ein elastisches Rückstellteil (80) entgegenwirkt.

9. Kindersitz nach Anspruch 8, **dadurch gekennzeichnet, dass** der Gleitblock einen Stift (23) aufweist, welcher mit einem Schlitz (24) gekoppelt ist, welcher an einem ersten Ende (25) der Steuerstange (20) vorhanden ist, wobei diese letztgenannte räumlich mit ihrer Achse parallel zu der Längsachse (W) der Rückenlehne (3) angeordnet ist, wobei der Schlitz zu der Achse der Stange schräg verläuft.

10. Kindersitz nach Anspruch 9, **dadurch gekennzeichnet, dass** die Steuerstange (20) ein zweites Ende (41) aufweist, welches mit den ersten Steuermitteln (10) zur Bewegung der Kopfstütze (4) zusammenwirkt.

11. Kindersitz nach Anspruch 1, **dadurch gekennzeichnet, dass** die Steuermittel (10) zur Bewegung der Kopfstütze (4) ein Körper (37) sind, welcher zwischen Führungen (42) bewegbar ist, welche von der inneren Fläche (43) des zweiten Abschnitts (13) der Rückenlehne (3) hervorragen, wobei der Körper (37) einen Greifabschnitt (45) aufweist und in dem Inneren der Rückenlehne (3) angeordnet ist.

12. Kindersitz nach Anspruch 11, **dadurch gekennzeichnet, dass** der Greifabschnitt (45) durch eine Öffnung (46) erreichbar ist, welche in der Rückenlehne (3) vorhanden ist.

13. Kindersitz nach Anspruch 12, **dadurch gekennzeichnet, dass** die Öffnung (46) in dem zweiten Abschnitt (13) der Rückenlehne (3) vorhanden ist und vorn durch den ersten Abschnitt (12) der Rückenlehne verschlossen ist, wobei der Körper (37) der ersten Steuermittel (10) zur Bewegung der Kopfstütze (4) zwischen dem ersten und dem zweiten Abschnitt (12, 13) eingeschlossen und durch ein Zusammenwirken mit einem Rückhalteelement, welches von zumindest einem der Abschnitte aufgenommen ist, unbeweglich dazu ist.

14. Kindersitz nach Ansprüchen 3 und 11, **dadurch gekennzeichnet, dass** der Körper (37) eine Aufnahme (54) für die Steuermittel (11) zur Bewegung der Seitenteile (7) aufweist.

15. Kindersitz nach Anspruch 1 oder 14, **dadurch gekennzeichnet, dass** die Steuermittel (11) zur Bewegung der Seitenteile (7) ein Drehteil (51) sind, welches mit einem Übertragungsteil (56) zusammenwirkt, welches mit einem bewegbaren Gleitblock (58) verbunden ist, welcher in die Rückenlehne eingeführt ist und mit den bewegbaren Seitenteilen (7) zusammenwirkt, wobei der Gleitblock und die Seitenteile (7) derart ausgebildet sind, dass eine Verschiebung von einem eine Bewegung des anderen senkrecht zu der Verschiebungsrichtung erzeugt.

16. Kindersitz nach Anspruch 15, **dadurch gekennzeichnet, dass** das Drehteil (51) ein Rad mit einer auf dem Umfang vorhandenen Vertiefung ist, wobei in der Vertiefung ein Kabel (46) vorhanden ist, welches als das Übertragungselement (56) fungiert und mit dem bewegbaren Gleitblock zusammenwirkt, wobei das Kabel auch mit einer Rückstellrolle (61), welche von dem mit einer Vertiefung versehenen Rad (51) beabstandet ist, zusammenwirkt.

17. Kindersitz nach Anspruch 15, **dadurch gekennzeichnet, dass** sich der Gleitblock zwischen Führungen (73), welche von einer inneren Fläche (43) des zweiten Abschnitts (13) der Rückenlehne hervorragen, mit einer geradlinigen Bewegung entlang der Längsachse (W) der Rückenlehne (3) bewegt, wobei der Gleitblock Vorsprünge (66) trägt, welche in Schlitze (67) eingeführt sind, die in flachen Teilen (68) vorgesehen sind, welche unbeweglich zu den Seitenteilen (7) und durch Öffnungen (70), die seitlich in diesen letztgenannten vorhanden sind, in die Rückenlehne (3) eingeführt sind, wobei die Schlitze räumlich derart angeordnet sind, dass ihre Achsen schräg zu der Längsachse (W) der Rückenlehne (3) angeordnet sind.

## Revendications

1. Siège auto pour enfant (1) comprenant une partie d'assise (2) et un dossier (3), ce dernier étant doté d'un appui-tête (4) et de pièces latérales (7) faisant saillie au-dessus de la partie d'assise (2), lesdites pièces latérales (7) étant mobiles latéralement et pouvant être espacées pour augmenter l'espace utile pour retenir l'enfant sur le dossier (3), ledit appui-tête (4) étant mobile par rapport à la partie d'assise (2) avec un mouvement indépendant de celui desdites pièces latérales (7), lesdits mouvements permettant d'adapter la taille du dossier (3) à la croissance de l'enfant, des premiers et seconds moyens de commande (10, 11) étant prévus pour déplacer lesdites pièces latérales (7) et ledit appui-tête (4), lesdits premiers et seconds moyens de commande (10, 11) étant fonctionnellement associés à l'appui-tête (4), lesdits seconds moyens de commande (11) pour déplacer lesdites pièces latérales (7) étant par conséquent assemblés avec des premiers moyens de commande (10) pour relever l'appui-tête, ledit agencement permettant à l'appui-tête (4) et auxdites pièces latérales (7) d'être déplacés séparément, et permettant à ces dernières d'être déplacées quelle que soit la position de l'appui-tête (4),
**caractérisé en ce que** :
les premiers moyens de commande (10) pour déplacer l'appui-tête (4) et ceux (11) pour déplacer les pièces latérales sont tous deux disposés sur l'appui-tête (4).

2. Siège pour enfant selon la revendication 1, **caractérisé en que** les premiers moyens de commande (10) pour déplacer l'appui-tête (4) sont adjacents aux seconds moyens de commande (11) pour déplacer les pièces latérales (7).

3. Siège pour enfant selon la revendication 1, **caractérisé en ce que** les premiers moyens de commande (10) pour déplacer l'appui-tête (4) contiennent les seconds moyens de commande (11) pour déplacer les pièces latérales (7).

4. Siège pour enfant selon la revendication 1, **caractérisé en ce que** l'appui-tête (4) est défini au niveau d'une extrémité d'au moins une partie (12, 13) du dossier (3) et est mobile par rapport à un élément de support (14) pour ce dernier, fixé sur la partie d'assise (2).

5. Siège pour enfant selon la revendication 4, **caractérisé en ce que** l'appui-tête est défini par des extrémités raccordées d'une première partie (12) et d'une seconde partie (13) de l'appui-tête qui définissent une partie avant et une partie arrière de ce dernier, **en ce qu'**entre lesdites première et seconde parties (12, 13), on dispose l'élément de support (14) pour le dossier, ces parties étant solidaires entre elles et étant mobiles de manière guidée le long dudit élément de support (14).

6. Siège pour enfant selon la revendication 5, **caractérisé en ce qu'**une face interne (43) de l'une desdites première et seconde parties (12, 13) qui fait face audit élément de support (14) présente des guides (100) pour le mouvement relatif desdites parties (12, 13) le long dudit élément de support (14), ce dernier étant contenu à l'intérieur desdits guides (100).

7. Siège pour enfant selon la revendication 4, **caractérisé en ce que** l'élément de support (14) présente des moyens de butée (17) pour empêcher le mouvement des première et seconde parties (12, 13) du dossier (3) le long de ces derniers, lesdites parties présentant des contre-moyens (18) mobiles agencés pour coopérer avec lesdits moyens afin d'empêcher ledit mouvement, mais être séparés les uns des autres pour permettre ce mouvement, lesdits contre-moyens étant actionnés par les premiers moyens de commande (10) pour déplacer l'appui-tête (4).

8. Siège pour enfant selon la revendication 7, **caractérisé en ce que** les moyens de butée sont une pluralité d'évidements (17) prévus le long d'un côté plus long d'au moins une fente allongée (15) formée à l'intérieur de l'élément de support (14), les contre-moyens étant définis par une saillie correspondante (18) sur un bloc de glissière (19) mobile entre les éléments de guidage (19A) faisant saillie d'une face interne (43) de la seconde partie (13) du dossier vers l'élément de support (14), ledit bloc de glissière étant mobile entre lesdits guides dans une direction transversale par rapport à un axe longitudinal (W) du dossier (3), ledit mouvement étant généré et contrôlé par les moyens de commande (10) via une tige de support (20) à laquelle ledit bloc de glissière est fixé, le mouvement étant opposé par un élément de rappel élastique (80).

9. Siège pour enfant selon la revendication 8, **caractérisé en ce que** le bloc de glissière présente une broche (23) couplée à une fente (24) prévue au niveau d'une première extrémité (25) de la tige de commande (20), cette dernière se trouvant spatialement avec son axe parallèle à l'axe longitudinal (W) du dossier (3), ladite fente étant inclinée par rapport à l'axe de ladite tige.

10. Siège pour enfant selon la revendication 9, **caractérisé en ce que** la tige de commande (20) présente une seconde extrémité (41) coopérant avec les premiers moyens de commande (10) pour déplacer l'appui-tête (4).

11. Siège pour enfant selon la revendication 1, **caractérisé en ce que** les moyens de commande (10) pour déplacer l'appui-tête (4) sont un corps (37) mobile entre des guides (42) faisant saillie de la face interne (43) de la seconde partie (13) du dossier (3), ledit corps (37) présentant une partie de préhension (45) et étant à l'intérieur du dossier (3).

12. Siège pour enfant selon la revendication 11, **caractérisé en ce que** ladite partie de préhension (45) peut être atteinte par une ouverture (46) prévue dans le dossier (3).

13. Siège pour enfant selon la revendication 12, **caractérisé en ce que** ladite ouverture (46) est prévue dans la seconde partie (13) du dossier (3) et est fermée de manière frontale par la première partie (12) du dossier, ledit corps (37) des premiers moyens de commande (10) pour déplacer l'appui-tête (4) étant enfermé entre lesdites première et seconde parties (12, 13) et étant solidaire de ces dernières, en coopérant avec un élément de retenue supporté par au moins l'une desdites parties.

14. Siège pour enfant selon les revendications 3 et 11, **caractérisé en ce que** le corps (37) présente un siège (54) pour les moyens de commande (11) afin de déplacer les pièces latérales (7).

15. Siège pour enfant selon la revendication 1 ou 14, **caractérisé en ce que** les moyens de commande (11) pour déplacer les pièces latérales (7) sont un élément rotatif (51) coopérant avec un élément de transmission (56) raccordé à un bloc de glissière mobile (58) inséré dans le dossier et coopérant avec les pièces latérales mobiles (7), ledit bloc de glissière et lesdites pièces latérales (7) étant formés de sorte qu'une translation de l'un produise un mouvement de l'autre perpendiculaire à la direction de translation.

16. Siège pour enfant selon la revendication 15, **caractérisé en ce que** l'élément rotatif (51) est une roue périmétralement rainurée, dans la rainure de laquelle trouve un câble (46) agissant en tant qu'élément de transmission (56) et coopérant avec le bloc de glissière mobile, ledit câble coopérant également avec une poulie de retour (61) distante de ladite roue rainurée (51).

17. Siège pour enfant selon la revendication 15, **caractérisé en ce que** le bloc de glissière se déplace entre des guides (73), faisant saillie d'une face interne (43) de la seconde partie (13) du dossier, avec le mouvement rectiligne le long de l'axe longitudinal (W) dudit dossier (3), le bloc de glissière supportant des saillies (66) insérées dans des fentes (67) prévues dans des parties plates (68) solidaires des pièces latérales (7) et insérées dans le dossier (3) par des ouvertures (70) prévues latéralement dans ce dernier, les fentes se trouvant spatialement avec leur axe incliné par rapport à l'axe longitudinal (W) du dossier (3).
